# EUROPEAN PATENT SPECIFICATION

(11) **EP 4 468 381 B1**
(45) Date of publication and mention of the grant of the patent: **24.06.2026**
(21) Application number: 23898290.4
(22) Date of filing: 29.11.2023
(51) Int. Cl.: H01M 4/04, F26B 3/30, F26B 25/00, F26B 21/00

(54) **ELECTRODE DRYING SYSTEM AND ELECTRODE DRYING METHOD USING SAME**
ELEKTRODENTROCKNUNGSSYSTEM UND ELEKTRODENTROCKNUNGSVERFAHREN DAMIT
SYSTÈME DE SÉCHAGE D'ÉLECTRODE ET PROCÉDÉ DE SÉCHAGE D'ÉLECTRODE L'UTILISANT

(30) Priority: 02.12.2022 KR 20220166514
(43) Date of publication of application: 27.11.2024
(73) Proprietor: LG Energy Solution, Ltd., Seoul 07335 (KR)
(72) Inventor: SON, Jin Young, Daejeon 34122 (KR); JEONG, Eun Hoe, Daejeon 34122 (KR); CHOY, Sang Hoon, Daejeon 34122 (KR); JEON, Shin Wook, Daejeon 34122 (KR); KO, Young Kuk, Daejeon 34122 (KR)
(74) Representative: Plasseraud IP
(86) International application number: PCT/KR2023/019428
(87) International publication number: WO 2024/117764

(56) References cited:
- CN-A- 115 298 848
- KR-A- 20120 057 437
- KR-A- 20160 034 796
- KR-A- 20220 030 748
- KR-A- 20220 074 758
- KR-A- 20220 074 758
- KR-A- 20220 078 077
- US-A- 3 590 495
- US-A1- 2018 229 512

## Description

### [Technical Field]

This application claims the benefit of priority based on Korean Patent Application No. 10-2022-0166514, filed on December 02, 2022.

The present invention relates to an electrode drying system and a method for drying electrodes using the system.

### [Background Art]

Secondary batteries, which can be charged and discharged, have been widely used as an energy source for wireless mobile devices. In addition, secondary batteries are also attracting attention as an energy source for electric vehicles and hybrid electric vehicles, which have been proposed as a way to solve problems such as air pollution from conventional gasoline and diesel vehicles that use fossil fuels. Therefore, the types of applications that use secondary batteries are diversifying due to the advantages of secondary batteries, and it is expected that in the future, secondary batteries will be applied in many more fields and products than today.

Based on the construction of electrodes and an electrolyte, the lithium secondary battery may be classified as a lithium-ion battery, a lithium-ion polymer battery, or a lithium polymer battery. Among them, the lithium-ion polymer battery has been increasingly used because the lithium-ion polymer battery has a low possibility of electrolyte leakage, and can be easily constructed.

In general, depending on the shape of a battery case, these secondary batteries are classified into a cylindrical battery and/or a prismatic battery in which a electrode assembly is included in a cylindrical or prismatic metal can, and a pouch-type battery in which the electrode assembly is included in a pouch-type case of an aluminum laminate sheet. The electrode assembly included in the battery case is a power element including a positive electrode, a negative electrode, and a separator interposed between the positive electrode and the negative electrode, and capable of charging and discharging, and is classified into a jelly-roll type in which long sheet-type positive and negative electrodes coated with an active material are wound with a separator being interposed therebetween, and a stack type in which a plurality of positive and negative electrodes are sequentially stacked with a separator being interposed therebetween.

The positive electrode and the negative electrode are formed by applying a positive electrode slurry containing a positive electrode active material and a negative electrode slurry containing a negative electrode active material to a positive electrode current collector and a negative electrode current collector, respectively, to thereby form a positive electrode active material layer and a negative electrode active material layer, respectively, followed by drying and rolling them.

At this time, the drying condition of the electrode influences the quality and physical properties of the electrode. Particularly, the adhesive force and the coupled level of the surface of the electrode can be significantly changed by controlling the deviation of the drying amount for the width direction of the electrode and the time point when the drying is completed during the drying.

Further, the electrode sheet, on which an electrode slurry has been coated, goes through a drying process while moving through a drying section as a consecutive process, but there may be a time interval between an electrode slurry coating process and a drying process, and the residual amount of heat is accumulated inside the oven during the drying standby time when the electrode sheet is not supplied into the drying section. In the case that an electrode sheet is supplied into the oven in a state that such a residual amount of heat has been accumulated, a crack or a wrinkle may be generated on the electrode during the initial drying section due to the excessive amount of heat accumulated in the oven.

Particularly, a crack on the electrode due to over-drying in the initial drying section allows electrode powder to be generated, and the electrode powder is scattered along the convection of hot air in the oven, thereby contaminating the surrounding electrode and deteriorating the quality of the electrode. Hence, it is very important to prevent over-drying in the initial drying section of the electrode.

KR20220074758 A and CN115298848 A disclose electrode drying systems and methods of drying an electrode according the prior art.

### [Disclosure]

### [Technical Problem]

Therefore, there is a need for an electrode drying technology for preventing over-drying during the initial drying section.

The present invention is directed to solving the above problems, and provides an electrode drying system and an electrode drying method in which, in the process of drying an electrode having a floating time, an electrode that is put into a drying furnace having a floating time is prevented from cracking by over-drying that occurs during early drying due to excess heat accumulated in the drying furnace.

### [Technical Solution]

The present invention provides an electrode drying system according to claim 1. This electrode drying system according to the present invention includes: a drying furnace in which electrodes are dried; and a data processing part that calculates a residual quantity of heat (Qres) in the drying furnace during an immobility time (Timm) from pre-calculated drying control data, wherein the residual quantity of heat (Qres) is the quantity of heat accumulated in the drying furnace during a break in the input of the electrode into the drying furnace; and a control part that controls the amount of heat supplied to the drying furnace, wherein the control part supplies a supply quantity of heat (Qsup) to the drying furnace that subtracts the residual quantity of heat (Qres) from a common quantity of heat (Qcom), wherein the common quantity of heat (Qcom) is the quantity of heat that would normally be supplied to the drying furnace if it did not have an immobility time (Timm).

According to the invention, the drying control data includes electrode drying rate as a function of immobility time (Timm) and supply quantity of heat (Qsup).

According to the invention, the data processing part extracts, from the pre-calculated drying control data, drying control data having an immobility time that is closest to the immobility time on the line (Timm), and calculates, based on the extracted drying control data, the residual quantity of heat (Qres) that is the common quantity of heat (Qcom) subtracted by the supply quantity of heat (Qsup).

In another specific example, the control part controls the supply quantity of heat (Qsup) to increase time series while the residual quantity of heat (Qres) in the drying furnace remains.

Moreover, the control part controls that the drying furnace is supplied with common quantity of heat (Qcom) if there is no residual quantity of heat (Qres) in the drying furnace.

In a specific example, a drying furnace includes a hot air nozzle that supplies hot air to the electrodes to apply convection heat and a heater that applies radiant heat to the electrodes.

Here, the control part controls the amount of heat supplied to the drying furnace by increasing or decreasing one or more of the following conditions: the temperature of the hot air dispensed from the hot air nozzle, the air velocity of the hot air, and the output of the heater.

In another specific example, the control part uniformly controls the amount of heat supplied to the drying furnace for the entire drying furnace.

In another example, the electrode drying system according to the present invention further includes: a sensor part that detects that an electrode is not being fed into the drying furnace and transmits immobility time (Timm) information to a data processing part.

In another example, the electrode drying system according to the present invention further includes a measuring part that collects drying amount information of the electrode and transmits the collected information to a control part; the control part determines the drying amount level of the electrode based on the drying amount information received from the measuring part and compensates for the increase or decrease in the amount of heat supplied to the drying furnace in real time.

In a specific example, the measuring part collects at least one of a solids content of the electrode and a temperature of the electrode surface before and after passing through the drying furnace.

In addition, the present invention provides a method of drying an electrode according to claim 10.

This method of drying an electrode according to the present invention includes: (a) collecting immobility time (Timm) information; (b) calculating a residual quantity of heat (Qres) in the drying furnace during the immobility time (Timm) from pre-calculated drying control data, wherein the residual quantity of heat (Qres) is the quantity of heat accumulated in the drying furnace during a break in the input of the electrode into the drying furnace; (c) introducing an electrode into the drying furnace having the immobility time; and (d) controlling the amount of heat supplied to the drying furnace, wherein (d) is characterized in that the supply quantity of heat (Qsup) is supplied to the drying furnace by subtracting the residual quantity of heat (Qres) from a common quantity of heat (Qcom), wherein the common quantity of heat (Qcom) is the quantity of heat that would normally be supplied to the drying furnace if it did not have an immobility time (Timm).

According to the invention, the drying control data includes electrode drying rate as a function of immobility time (Timm) and supply quantity of heat (Qsup).

According to the invention, (b) extracts, from the pre-calculated drying control data, drying control data having an immobility time that is closest to the immobility time on the line (Timm) collected in (a), and calculates, based on the extracted drying control data, the residual quantity of heat (Qres) that is the common quantity of heat (Qcom) subtracted by the supply quantity of heat (Qsup).

In another specific example, (d) controls the supply quantity of heat (Qsup) to be increased time series while a residual quantity of heat (Qres) in the drying furnace remains, and controls the drying furnace to be supplied with a common quantity of heat (Qcom) when there is no residual quantity of heat (Qres) in the drying furnace.

### [Advantageous Effects]

According to the electrode drying system of the present invention and the method for drying electrodes using the system, an electrode is put into a drying furnace having an immobility time, and a lower amount of heat is supplied than the amount of heat commonly supplied during the initial drying time to suppress over-drying of the electrode due to the excess heat, and accordingly, cracking of the electrode is prevented, which has the effect of suppressing contamination inside the drying furnace, and the quality of the electrode can be improved by supplying an optimal amount of heat to the drying furnace during the initial drying time based on pre-calculated drying data.

### [Brief Description of the Drawings]

FIG. 1 is a block diagram illustrating the configuration of an electrode drying system according to one embodiment of the present invention.
FIG. 2 is a schematic diagram illustrating the structure of an electrode drying system according to one embodiment of the present invention.
FIG. 3 is a block diagram illustrating the configuration of an electrode drying system according to another embodiment of the present invention.
Figure 4 is a schematic diagram illustrating the structure of an electrode drying system according to another embodiment of the present invention.
FIG. 5 is a schematic diagram illustrating a relationship with electrode drying rate for determining a supply quantity of heat (Qsup) according to one example of the present invention.
FIG. 6 is a flow chart illustrating the sequence of an electrode drying method according to one embodiment of the present invention.

### [Best Mode]

The present invention may have various modifications and various embodiments, and thus specific embodiments thereof will be described in detail below.

The terms "comprise," "include," and "have" used herein designate the presence of characteristics, numbers, steps, actions, components, or members described in the specification or a combination thereof, and it should be understood that the possibility of the presence or addition of one or more other characteristics, numbers, steps, actions, components, members, or a combination thereof is not excluded in advance.

In addition, in the present invention, when a part of a layer, film, region, plate, or the like is disposed "on" another part, this includes not only a case in which one part is disposed "directly on" another part, but a case in which still another part is interposed therebetween. In contrast, when a part of a layer, film, region, plate, or the like is disposed "under" another part, this includes not only a case in which one part is disposed "directly under" another part, but a case in which still another part is interposed therebetween. In addition, in the present application, "on" may include not only a case of being disposed on an upper portion but also a case of being disposed on a lower portion.

In general, the electrodes with electrode slurry applied to them are transported through the drying section in a continuous process, but for various reasons, there may be a time gap between the electrode slurry application process and the drying process, and during this gap, when the electrodes are not in the drying section, residual quantity of heat accumulates inside the drying furnace. If the electrode is placed in the drying furnace with this residual quantity of heat buildup, the residual quantity of heat buildup in the drying furnace can cause the electrode to crack or wrinkle during the initial drying section. In particular, electrode cracks caused by over-drying during the initial drying period can produce electrode powder, which can be scattered far away along the hot air convection in the drying furnace, contaminating neighboring electrodes and degrading the quality of the electrodes. Therefore, it is very important to prevent over-drying during the initial drying period of the electrodes.

Accordingly, the present invention provides that, in a drying process of an electrode having an immobility time, an electrode being introduced into a drying furnace having an immobility time is temporarily supplied with a reduced amount of heat than a common amount of heat in the drying furnace during an initial drying time immediately after the electrode is introduced into the drying furnace, in order to suppress over-drying occurring during the initial drying due to a residual amount of heat accumulated in the drying furnace, but a differential amount of heat is supplied in a time series. Further, from the pre-calculated drying control data, the drying control data having the condition closest to the immobility time condition on the line is derived, and the residual quantity of heat inside the drying furnace during the immobility time is calculated from the calculated drying control data. Then, the control part calculates the supply quantity of heat by subtracting the residual quantity of heat from the common quantity of heat, and supplies the supply quantity of heat to the drying furnace. In this way, the supply quantity of heat supplied to the drying furnace during the initial drying time is a reduced quantity of heat from the common quantity of heat and is calculated by taking into account the residual quantity of heat in the drying furnace.

It is characterized in that the supply quantity of heat differentially supplied in the time series is determined and controlled during the initial drying time after the electrode is introduced into the drying furnace with the immobility time based on the drying control data at the condition that best matches the current condition among the pre-obtained data. The determination of the quantity of heat to be supplied to the drying furnace can be performed in an automated method using a data processing part and a control part.

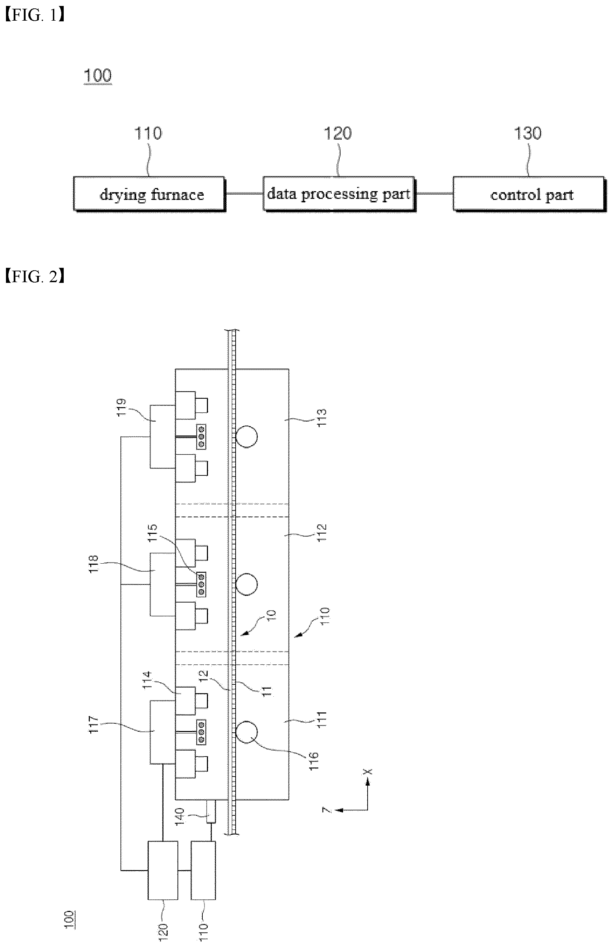

FIG. 1 is a block diagram illustrating the configuration of an electrode drying system according to one embodiment of the present invention. FIG. 2 is a schematic diagram illustrating the structure of an electrode drying system according to one embodiment of the present invention. Referring to Figures 1 and 2, the electrode drying system 100 according to the present invention may be compartmentalized into a plurality of drying zones 111, 112, 113 along the x-axis, which is the direction in which the electrodes 10 are transported, and includes a drying furnace 110 in which the electrodes 10 are dried; a data processing part 120 that calculates a residual quantity of heat (Qres) inside the drying furnace 110 during an immobility time (Timm) from pre-calculated drying control data; and a control part 130 that controls the amount of heat supplied to the drying furnace 110. The control part 130 is characterized in that it supplies a supply quantity of heat (Qsup) to the drying furnace 110, which is a common quantity of heat (Qcom) subtracting the residual quantity of heat (Qres).

In the present invention, the term "immobility time" refers to the time during which drying of the electrode 10 in the drying furnace 110 does not proceed, or the temporal interval during which the electrode 10 is not fed into the drying furnace 110, for various process reasons. Such an immobility time (Timm) may be, for example, from 30 seconds to 30 minutes, from 30 seconds to 20 minutes, from 1 minute to 15 minutes.

The residual quantity of heat (Qres) refers to the quantity of heat accumulated in the drying furnace 110 during a break in the input of the electrode 10 into the drying furnace 110.

Furthermore, the term "common quantity of heat (Qcom)" means the quantity of heat that would normally be supplied to the drying furnace 110 if it did not have an immobility time (Timm).

Moreover, Qsup refers to the amount of heat supplied in the drying furnace 110, wherein the supply quantity of heat Qsup is determined from the temperature of the hot air blown from the hot air nozzle located in the drying furnace, the air velocity of the hot air, and the magnitude of the heat energy supplied in the drying furnace by the output of the heater.

Further, the initial drying time refers to a predetermined time interval during which the electrode 10 is supplied with a reduced amount of heat than the common quantity of heat (Qcom) after the electrode 10 is introduced into the drying furnace 110, Specifically, a time interval of 60 minutes after the electrode 10 is introduced into the drying furnace 110, or a time interval of 30 minutes after the electrode 10 is introduced into the drying furnace 110, or a time interval of 20 minutes after the electrode 10 is introduced into the drying furnace 110, or a time interval of 10 minutes after the electrode 10 is introduced into the drying furnace 110, or a time interval of 5 minutes after the electrode 10 is introduced into the drying furnace 110. The length of the initial drying time may vary depending on the length of the immobility time (Timm), and if the immobility time (Timm) is relatively long, the accumulated residual quantity of heat (Qres) in the drying furnace (110) may be excessive, and thus the initial drying time may be long, and if the immobility time (Timm) is relatively short, the accumulated residual quantity of heat (Qres) in the drying furnace (110) may be relatively small, and thus the initial drying time may be short.

On the other hand, if the electrode 10 is introduced into the drying furnace 110 with a residual quantity of heat (Qres) accumulated, the residual quantity of heat (Qres) may cause over-drying of the electrode 10 due to the accumulated residual quantity of heat (Qres), which may cause cracking of the electrode 10. Therefore, in the case of having such an immobility time (Timm), it is necessary to control to temporarily reduce the supply quantity of heat in the drying furnace (110), and it is necessary to select the supply quantity of heat appropriately while reducing the supply quantity of heat.

The electrode drying system 100 of the present invention is therefore intended to inhibit cracking of the electrode 10 due to an accumulated residual quantity of heat (Qres), in the presence of an immobility time (Timm), the control part 130 of the present invention temporarily supplies a reduced quantity of heat than the common quantity of heat in the drying furnace 110 during an initial drying time after the electrode 10 is supplied to the drying furnace 110 with the immobility time (Timm), the amount of heat to be supplied being determined by the data processing part 120 of the present invention.

Specifically, the data processing part 120 of the present invention derives the residual quantity of heat (Qres) inside the drying furnace 110 during the immobility time (Timm) from the pre-calculated drying control data. The data processing part 120 extracts, from the pre-calculated drying control data, drying control data having an immobility time (Timm) that matches the immobility time (Timm) on the line. Then, based on the extracted drying control data, the residual quantity of heat (Qres) is calculated by subtracting the supply quantity of heat (Qsup) from the common quantity of heat (Qcom). Here, the immobility time(Timm) on the line means the immobility time(Timm) generated on the drying line currently in progress.

The drying control data includes information of the electrode drying rate according to the supply quantity of heat (Qsup) by the immobility time (Timm). And, it includes information of an output value of the heat source that determines the supply quantity of heat (Qsup). The output value of the heat source may be a temperature value of the hot air, a speed value of the hot air, an output value of the heater, etc.

Further, the drying control data may further include infrared heater running time , which is the time from when the infrared heater is activated to when the electrode 10 is introduced into the drying furnace 110 having an immobility time (Timm), and output value information, and may further include electrode 10 product model name and seasonal room temperature information, if desired.

Specifically, the drying control data is electrode drying rate information measured when the electrode 10 is dried while applying a different supply quantity of heat (Qsup) for a period of time after the electrode 10 is introduced into the drying furnace 110 having a specific immobilization time (Timm). The details of the supply quantity of heat (Qsup) and the electrode drying rate of the drying control data are described below.

More specifically, in one example, in the drying control data, the initial drying time (T), which is a constant time after the electrode (10) is introduced into the drying furnace (110) with immobility time (Timm), is divided into n (n≥2) time series, and each time series, T1, T2, T3...Tn, each supply quantity of heat (Qsup) supplied in the drying furnace 110 is defined as Q1,Q2,Q3...Qn, and the electrode drying rate in each time interval can be defined as Y1,Y2,Y3...Yn.

Further, assuming that the time intervals T1,T2,...T5 are time intervals in which the residual quantity of heat (Qres) in the drying furnace 110 remains, and the time intervals T6,T7...T10 are time intervals in which the residual quantity of heat (Qres) in the drying furnace 110 does not remain, the supply quantity of heat (Qsup) Q1 in the first time interval T1 has a value (Qcom>Q1) that is less than the common quantity of heat (Qcom), and the supply quantity of heat (Qsup) Q2 in the time interval T2 after the first time interval T1 has a value (Qcom>Q2>Q1) that is slightly increased compared to Q1, but less than the common quantity of heat (Qcom). Further, the supply quantity of heat (Qsup) Q3, Q4, and Q5 corresponding to the time intervals T3, T4, and T5 after T2, respectively, have the value (Qcom>Q5>Q4>Q3>Q2>Q1), just as Q2 above. In this way, if there is a residual quantity of heat Qres in the drying furnace 110 having an immobility time Timm, the initial over-drying of the electrode 10 can be suppressed by supplying a reduced quantity of heat than the common quantity of heat Qcom and gradually/stepwise increasing the supply quantity of heat over time.

On the other hand, the respective heat quantities in the time intervals T6,T7...T10, where there is no residual quantity of heat (Qres) in the drying furnace 110, may have the relationship Qcom=Q6=Q7=Q8=Q9=Q10. This means that since there is no residual quantity of heat (Qres) in the drying furnace 110, the quantity of heat supplied in the drying furnace 110 has the same value as the common quantity of heat (Qcom). In other words, in the drying control data, the quantity of heat supplied (Qsup) in each time interval is determined by considering the residual quantity of heat (Qres) in the drying furnace 110 in each time interval.

Further, in another example, in the drying control data, the electrode drying rate at each time interval T1,T2,T3... Tn is defined as Y1,Y2,Y3... Yn, and assuming that among the electrode drying rates in each time interval, the drying rate closest to the preset target electrode drying rate is Y5, each heat quantity at T1,T2,...T5 may have a relationship of Q1<Q2<Q3<Q4<Q5<Qcom, and each heat quantity at T6,T8... T10 may have a relationship of Q6=Q7=Q8=Q9=Q10=Qcom. In other words, in the time interval with the electrode drying rate closest to the target electrode drying rate, there is a high probability that there will be no residual heat remaining in the drying furnace 110. Reflecting this expected behavior, the supply quantity of heat Qsup may be determined to be less than the common quantity of heat Qcom in the time interval prior to the time interval with the electrode drying rate closest to the target electrode drying rate, and the supply quantity of heat Qsup may be determined to be equal to the common quantity of heat Qcom in the time interval after the time interval.

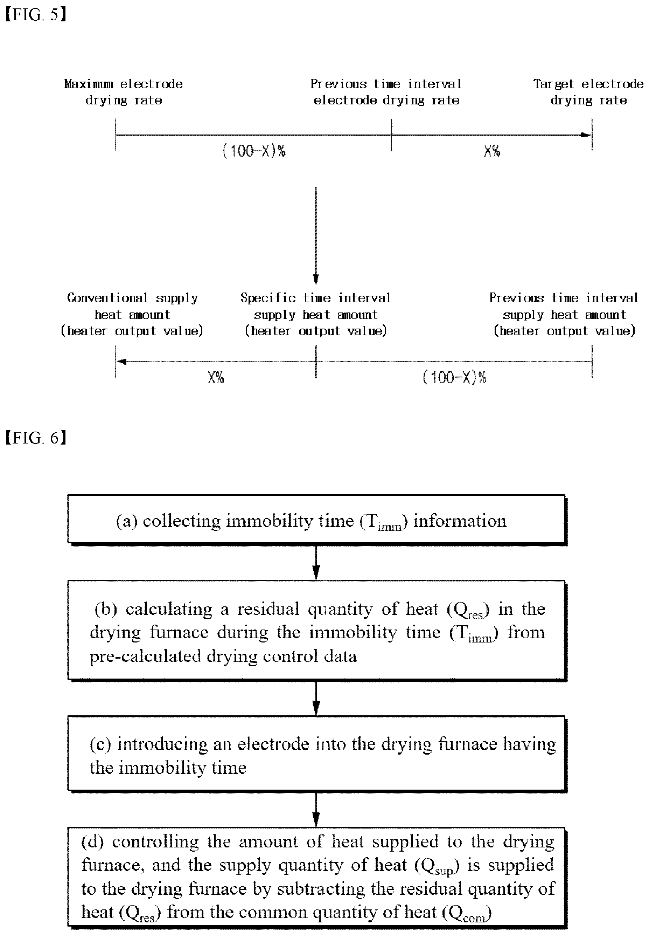

FIG. 5 is a schematic diagram illustrating a relationship with electrode drying rate for determining a supply quantity of heat (Qsup), according to one example of the present invention.

Referring to FIG. 5, the supply quantity of heat Qsup can be adjusted, for example, by controlling the output value of the infrared heater. Increasing the output value of the infrared heater will increase the supply quantity of heat (Qsup), and conversely, decreasing the output value of the infrared heater will decrease the supply quantity of heat (Qsup). At this time, the output value of the infrared heater in each time interval is determined by a proportional control (P control) method with the electrode drying rate. The proportional control (P control) refers to controlling the amount of operation in proportion to the difference between the target value and the current value. Here, the target value corresponds to the target electrode drying rate, the current value corresponds to the electrode drying rate in the previous time interval, and the amount of manipulation corresponds to the amount of change in the amount of heat supplied (or the output value of the infrared heater).

Referring to FIG. 5, in a relationship between a maximum electrode drying rate, which is a drying rate at which the electrode product model to be dried can be maximally dried, and a target electrode drying rate, an amount of variation (X%) between a supply quantity of heat (or an infrared heater output value) in a previous time interval and a supply quantity of heat (or an infrared heater output value) in a particular time interval is determined in proportion to a deviation (X%) between the electrode drying rate in a previous time interval and the target electrode drying rate. In other words, if the deviation between the electrode drying rate and the target electrode drying rate in a particular time interval is relatively large, the quantity of heat to be supplied in a particular time interval (or the infrared heater output value) will fluctuate relatively more than the quantity of heat to be supplied in the previous time interval (or the infrared heater output value). On the other hand, if the deviation between the electrode drying rate and the target electrode drying rate in a given time interval is relatively small, the quantity of heat supplied (or the infrared heater output value) in a given time interval will fluctuate relatively little compared to the quantity of heat supplied (or the infrared heater output value) in the previous time interval. This behavior allows for fine-tuning of the electrode drying rate in such a way that the amount of variation in the supply quantity of heat (or infrared heater output value) in a particular time interval decreases as the electrode drying rate in the previous time interval reaches the target electrode drying rate (proportional control).

However, if the electrode drying rate in the previous time interval is equal to or exceeds the target electrode drying rate (over-drying), the supply quantity of heat (or the infrared heater output value) in the particular time interval is not determined by the proportional control (P control) described above, but the supply quantity of heat (or the infrared heater output value) in the particular time interval is determined with the supply quantity of heat (or the infrared heater output value) equal to the electrode drying rate in the previous time interval. This is to prevent the electrode from over-drying by increasing the supply quantity of heat (or infrared heater output value) because the electrode drying rate in a particular time interval has already reached or exceeded the target electrode drying rate, and to increase the uniformity of electrode quality by supplying a constant amount of heat in the drying furnace.

Furthermore, if the electrode drying rate in a previous time interval is less than the target electrode drying rate (under-dried), it may be the case that there is a residual quantity of heat (Qres) in the drying furnace 110. On the other hand, if the electrode drying rate at a particular time interval exceeds the target electrode drying rate (over-dried), it may be the case that no residual quantity of heat (Qres) remains in the drying furnace 110. Generally, the target electrode drying rate is a value that is set based on whether or not residual quantity of heat (Qres) is remaining in the drying furnace 110.

Returning to the data processing part 120 of the present invention, the data processing part 120 extracts, from the pre-calculated drying control data, the drying control data having the closest immobility time (Timm) to the immobility time (Timm) on the line. Optionally, in addition to the immobility time (Timm) condition, the data processing part (120) may extract drying control data that matches one or more of the following conditions: the running time and output value of the infrared heater before the electrode is placed in the drying furnace with the immobility time (Timm), the product model name of the electrode (10), and the seasonal room temperature. In other words, from the pre-calculated drying control data, the drying control data having the closest immobility time (Timm) to the immobility time (Timm) on the line and at the same time having the same operating time and output value of the infrared heater on the line as the operating time and output value of the infrared heater on the line can be extracted. Alternatively, from the pre-calculated drying control data, the drying control data having the closest immobility time (Timm) to the immobility time (Timm) of the line, and at the same time, the same operating time and electrode product model name of the infrared heater on the line can be extracted.

At this time, the data processing part 120 searches for drying control data having immobility time (Timm) information that matches the immobility time (Timm) on the line, using a search grid. The search grid is one of the machine learning models in which the desired condition is parameterized and various combinations of parameters are tried to find the optimal parameters. Here, the parameter can be immobility time(Timm) in the present invention. The above parameters use the immobility time (Timm) as an example, but in addition to the immobility time (Timm) condition, it is possible to detect optimal drying control data that matches the condition by including one or more of the following conditions: the operating time and output value of the infrared heater before the electrode is introduced into the drying furnace with the immobility time (Timm), the product model name of the electrode 10, and the seasonal room temperature.

Further, the data processing part 120 may extract the drying control data that meets the conditions and, based on the extracted drying control data, calculate the residual quantity of heat (Qres) in each time interval from the deviation of the supply quantity of heat (Qsup) and the common quantity of heat (Qcom) in each time interval of the drying control data.

The control part 130 of the present invention controls the amount of heat supplied to the drying furnace 110. The control part 130 is characterized in that the control part 130 controls the amount of heat supplied to the drying furnace 110 in consideration of the residual quantity of heat (Qres) information calculated by the data processing part 120, and supplies a supply quantity of heat (Qsup) in the drying furnace 110 that subtracts the residual quantity of heat (Qres) from a common quantity of heat (Qcom).

Specifically, the residual quantity of heat (Qres) information detected by the data processing part 120 may be detected from the drying control data that has the same immobility time (Timm) as the immobility time (Timm) on the line, and is most consistent with the heat quantity conditions created in the drying furnace 110 on the line. Thus, the supply quantity of heat (Qsup) to be supplied in the drying furnace (110) on the line may be determined according to the supply quantity of heat (Qsup) for each time interval of the detected drying control data, and the supply quantity of heat (Qsup) for each time interval of the drying control data may be determined according to the output value of the heat source, such as the output value of the infrared heater derived through proportional control (P control). However, the supply quantity of heat (Qsup) to be supplied in the drying furnace (110) on the line may be calibrated according to various conditions other than the electrode drying amount information or the immobility time (Timm) determined in real time.

Further, the control part 130 is characterized in that, during the initial drying time, the supply quantity of heat (Qsup) is controlled to increase time series while a residual quantity of heat (Qres) remains in the drying furnace 110. And, characterized in that, when there is no residual quantity of heat (Qres) in the drying furnace (110), a common quantity of heat (Qcom) is controlled to be supplied to the drying furnace (110). If there is a residual quantity of heat (Qres) in the drying furnace (110), a supply quantity of heat (Qsup) is supplied to the drying furnace (110) that subtracts the residual quantity of heat (Qres) from the common quantity of heat (Qcom), wherein the supply quantity of heat (Qsup) is determined by the extent of the residual quantity of heat (Qres) in the drying furnace (110). Generally, when the electrode 10 is introduced into the drying furnace 110 having an immobility time (Timm), the residual quantity of heat (Qres) remaining in the drying furnace 110 will decrease over a period of time, so that the control part 130 can control the amount of heat to gradually increase the supply quantity of heat (Qsup) supplied to the drying furnace 110. On the other hand, if there is no remaining residual quantity of heat (Qres) in the drying furnace 110, a common quantity of heat (Qcom) is controlled to be supplied in the drying furnace 110.

In controlling the reduced quantity of heat to be supplied to the drying furnace 110 while the residual quantity of heat (Qres) remains in the drying furnace 110 as described above, the control part 130 uniformly controls the quantity of heat supplied to the drying furnace 110 throughout the drying furnace 110. When the drying furnace 110 has an immobility time (Timm), a residual quantity of heat (Qres) accumulates throughout the entire section of the drying furnace 110, i.e., throughout the plurality of drying zones, and it is desirable to perform the above control uniformly over the entire drying furnace 110 in order to attenuate the residual quantity of heat (Qres).

Hereinafter, the configuration of the electrode drying system 100 according to the present invention will be described in detail.

Referring to Figure 1, the electrode drying system 100 according to the present invention includes a drying furnace 110. The drying furnace 110 may be chamber-shaped, providing space for the electrodes 10 to be dried to travel inside the drying furnace 110, and preventing heat inside from escaping to the outside for drying.

On the other hand, the electrode may be a structure in which an electrode active material layer is formed by applying an electrode forming slurry including an electrode active material on the electrode current collector. The electrode slurry may be applied to at least one side of the current collector.

In this case, the current collector may be an anode collector or a cathode collector, and the electrode active material may be an anode active material or a cathode active material. In addition to the electrode active material, the electrode slurry may further include a conductive material and a binder.

In the present invention, the anode collector is typically made with a thickness of 3 to 500 micrometers. Such anode collectors are not particularly limited as long as they have high conductivity without causing chemical changes in the cell, for example, stainless steel, aluminum, nickel, titanium, calcined carbon, or aluminum or stainless steel with a surface treatment of carbon, nickel, titanium, silver, etc can be used. The collector can also form microscopic irregularities on its surface to increase the adhesion of the anode active material, which can be in the form of films, sheets, foils, nets, porous materials, foams, nonwoven materials, etc.

In the case of sheets for cathode collectors, they are typically made with a thickness of 3 to 500 micrometers. Such a cathode collector is not particularly limited as long as it is conductive without causing chemical changes in the cell, and for example, copper, stainless steel, aluminum, nickel, titanium, calcined carbon, copper or stainless steel surface treated with carbon, nickel, titanium, silver, aluminum-cadmium alloys, and the like may be used. As with the anode collector, it is also possible to form microscopic irregularities on the surface to strengthen the binding force of the cathode active material, and it can be used in various forms such as films, sheets, foils, nets, porous materials, foams, nonwoven materials, etc.

In the present invention, an anode active material, as a material capable of producing an electrochemical reaction, is a lithium transition metal oxide, including two or more transition metals, e.g., a layered compound such as lithium cobalt oxide (LiCoO2), lithium nickel oxide (LiNiO2) or the like substituted with one or more transition metals; lithium manganese oxide substituted with 1 or more transition metals; a layered compound of the formula LiNi1-yMyO2, wherein M = Co, Mn, Al, Cu, Fe, Mg, B, Cr, Zn, or Ga and contains one or more of the above elements, wherein 0.01≤y≤0.7); lithium nickel-based oxides, such as Li1+zNi1/3Co1/3Mn1/3O2, Li1+zNi0.4Mn0.4Co0.2O2, and the like; lithium nickel-based oxides, such as Li1+zNibMncCo1-(b+c+d)MdO(2-e)Ae (where, -0.5≤z≤0.5, 0.1≤b≤0.8, 0.1≤c≤0.8, 0≤d≤0.2, 0≤e≤0.2, wherein b+c+d<1, M = Al, Mg, Cr, Ti, Si or Y, and A = F, P or Cl); a lithium nickel cobalt manganese complex oxide represented by the formula Li1+xM1-yM'yPO4-zXz, wherein M = a transition metal, preferably Fe, Mn, Co or Ni, M' = Al, Mg or Ti, X = F, S or N, -0. 5≤x≤+0.5, 0≤y≤0.5, 0≤z≤0.1), such as, but not limited to, olivine-based lithium metal phosphates.

The cathode active material may include, for example, carbon, such as anthracite carbon, graphitized carbon, etc.; metal complex oxides, such as LixFe2O3 (0≤x≤1), LixWO2 (0≤x≤1), SnxMe1-xMe'yOz (Me: Mn, Fe, Pb, Ge; Me': Al, B, P, Si; 1, 2, 3 elements of the periodic table; halogens; 0<x≤1; 1≤y≤3; 1≤z≤8) and other metal complex oxides; lithium metals; lithium alloys; silicon-based alloys; tin-based alloys; SnO, SnO2, PbO, PbO2, Pb2O3, Pb3O4, Sb2O3, Sb2O4, Sb2O5, GeO, GeO2, Bi2O3, Bi2O4, Bi2O5, and the like; conductive polymers such as polyacetylene; Li-Co-Ni based materials; and the like.

The conductive material is typically added in an amount of 1 to 30 wt%, based on the total weight of the mixture including the anode active material. These materials are not particularly limited, provided that they are conductive without causing chemical changes in the cell, for example, graphite, such as natural or artificial graphite; carbon black, such as carbon black, acetylene black, ketchen black, channel black, furnace black, lamp black, summer black, etc; conductive fibers, such as carbon fibers or metal fibers; metal powders, such as carbon fluoride, aluminum, nickel powder; conductive whiskers, such as zinc oxide, potassium titanate; conductive metal oxides, such as titanium oxide; and conductive materials, such as polyphenylene derivatives can be used.

The binder is a component that aids in the bonding of the active material to the conductive material or the like and the bonding to the collector, and is typically added at 1 to 30 wt% based on the total weight of the mixture including the anode active material. Examples of such binders include polyvinylidene fluoride, polyvinyl alcohol, carboxymethyl cellulose (CMC), starch, hydroxypropyl cellulose, regenerated cellulose, polyvinylpyrrolidone, tetrafluoroethylene, polyethylene, polypropylene, ethylene-propylene-diene terpolymer (EPDM), sulfonated EPDM, styrene-butylene rubber, fluorinated rubber, and various copolymers.

On the other hand, such an electrode slurry can be prepared by dissolving the electrode active material, the conductive material and the binder in a solvent. There is no particular restriction on the type of solvent as long as it is capable of dispersing the electrode active material, and both aqueous and non-aqueous solvents can be used. For example, the solvent may be any solvent commonly used in the art, such as dimethyl sulfoxide (DMSO), isopropyl alcohol, N-methylpyrrolidone (NMP), acetone, or water, and one of these solvents alone or a mixture of two or more of these solvents may be used. The amount of solvent used may be any amount that can be adjusted to give the slurry a suitable viscosity, taking into account the application thickness, manufacturing yield, workability, etc. of the slurry, and is not particularly limited.

Referring to FIGS. 1 and 2, the drying furnace 110 may be compartmentalized into a plurality of drying zones, each drying zone having therein a drying means for drying the electrodes 10, a hot air nozzle 114 for supplying hot air to the electrodes 10 to apply convective heat, and a heater 115 for applying radiant heat to the electrodes 10. Referring to FIG. 2, the hot air nozzle 114 and heater 115 may be arranged at regular intervals spaced apart along the transport direction (MD direction, x direction) of the electrode 10, and apply hot air or radiant heat in a direction perpendicular to the electrode 10. In FIG. 1, the hot air nozzle 114 and the infrared heater are shown as being located on the upper side of the electrode 10, i.e., on the ceiling surface of the drying furnace 110, but if the electrode active material layer 12 is formed on both sides of the current collector, the hot air nozzle 114 and the heater 115 may be located on the upper and lower sides of the electrode 10, respectively. Furthermore, while the embodiment shown in FIG. 1 illustrates the inclusion of both a hot air nozzle 114 and a heater as drying means, it is possible to include only one of them. On the other hand, the hot air nozzle 114 includes a body part and a blowing part. The body part constitutes the body of the hot air nozzle 114 and secures the hot air nozzle 114 to the ceiling of the drying furnace 110. Furthermore, the body part is hollow inside and transmits hot air from the hot air source to the blowing part. Meanwhile, a blowing part is provided on the lower surface of the main body. The blowing part is connected to the body part, and the lower surface of the blowing part is formed with a blowing hole through which hot air is blown. The nozzle may be a structure in which a plurality of pores are arranged at regular intervals.

Meanwhile, the heater 115 may be an infrared heater in a specific example of the present invention, and the infrared heater may include an infrared heater that irradiates the electrode 10 with infrared light and a holder that supports or mounts the infrared heater. The shape of the infrared heater is not particularly restrictive, and for example, a rod-shaped heater may be arranged parallel to the direction of travel of the electrode 10 with the rod extending in the width direction of the electrode 10.

The hot air nozzle 114 and the heater 115 may be arranged alternately along the direction of travel of the electrode 10 to evenly supply hot air and infrared radiation to the surface of the electrode 10. However, there is no particular limitation on the form of arrangement, and a person of ordinary skill in the art can make appropriate design changes to the arrangement of the hot air nozzles 114 and the infrared heater depending on the drying conditions.

The electrode drying system 100 of the present invention can control the quantity of heat supplied within the drying furnace 110 by increasing or decreasing one or more of the following conditions: the temperature of the hot air dispensed from the hot air nozzle 114, the air velocity of the hot air, and the output of the heater.

Furthermore, the drying furnace 110 may include one or more transfer rollers 116 for transferring the electrodes 10. The transfer rollers 116 may be disposed in plurality at regular intervals spaced apart along the transfer direction of the electrode 10, to support the electrode 10 during the drying process, and to transfer the electrode 10 after drying to the outside of the drying furnace 110. Furthermore, the amount of drying of the electrode 10 may be controlled by manipulating the rotational speed of the transfer roller 116.

The electrode drying system 100 according to the present invention further comprises a sensor part 140, which detects that the electrode 10 is not fed into the drying furnace 110 and sends immobility time (Timm) information to the data processing part 120. The sensor part 140 may be installed near an inlet of the drying furnace 110 where the electrodes 10 are fed into the drying furnace 110. The sensor part 140 includes a detection sensor for detecting movement of the electrode 10, and the detection sensor is not limited in type as long as it is capable of detecting whether the electrode 10 is loaded or unloaded. Thus, the detection sensor may be in the form of a weight sensor, or may be in the form of a video camera.

The control part 130 of the present invention is connected to a first operation control part 117, a second operation control part 118 and a third operation control part 119 installed in the first drying zone 111, the second drying zone 112 and the third drying zone 113, respectively, and can command a reduction in the amount of heat supplied to them. The control part 130 receives, from the data processing part 120, information of the residual heat quantity (Qres) in the drying furnace 110 during the immobility time (Timm), determines a supply quantity of heat (Qsup) to be supplied in the drying furnace 110 when the electrode 10 is inserted in the drying furnace 110, and commands the operation control parts 117, 118, and 119 of the drying furnace 110 to supply the heat quantity in the drying furnace 110 with the determined supply quantity of heat (Qsup). Accordingly, the operation control parts 117, 118, 119 of the drying furnace 110 control the hot air nozzle 114 and the heater so that the heat quantity can be supplied according to the commanded supply quantity of heat (Qsup) information.

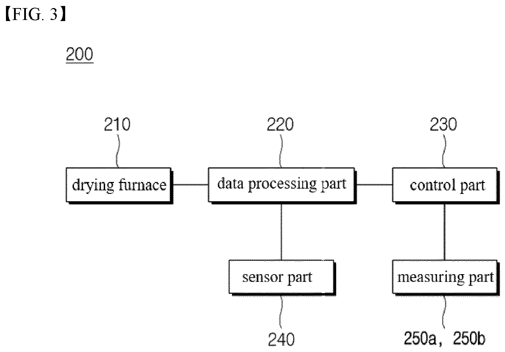

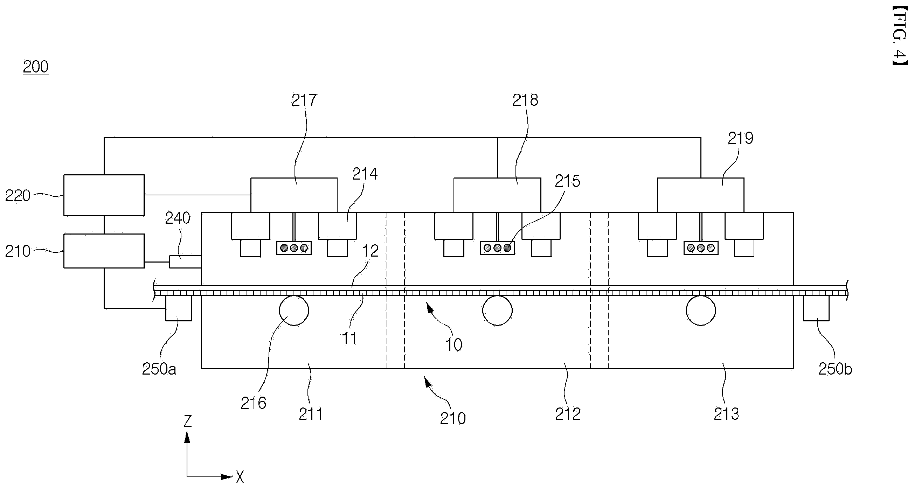

FIG. 3 is a block diagram illustrating the configuration of an electrode drying system 200 according to another embodiment of the present invention, and FIG. 4 is a schematic diagram illustrating the structure of an electrode drying system 200 according to another embodiment of the present invention. Referring now to FIG. 3 and FIG. 4, an electrode drying system 200 of the present invention includes: a drying furnace in which electrodes 10 are dried; a data processing part 220 that calculates a residual quantity of heat (Qres) inside the drying furnace during an immobility time (Timm) from pre-calculated drying control data; a control part (230) for controlling a quantity of heat supplied to the drying furnace, the control part (230) characterized in that the control part (230) supplies a supply quantity of heat (Qsup) into the drying furnace that subtracts a residual quantity of heat (Qres) from a common quantity of heat (Qcom). Further, the electrode drying system 200 further includes a sensor part 240 that detects that the electrode 10 is not supplied into the drying furnace and transmits immobility time (Timm) information to the data processing part 220; and a measurement part that collects drying amount information of the electrode 10 and transmits the collected information to the control part 230; the control part 230 determines the drying level of the electrode 10 according to the drying amount information received from the measurement part, corrects the increase or decrease in the amount of heat supplied to the drying furnace in real time, and controls the amount of heat supplied to the drying furnace according to the corrected amount of heat. In addition, the control part 230 is connected to the first operating control part 217, the second operating control part 218, and the third operating control part 219 installed in the first drying zone 211, the second drying zone 212, and the third drying zone 213, respectively, and can command a reduction in the amount of heat supplied to them.

The electrode drying system 200 provides a reduced amount of heat than the common amount of heat (Qcom) while the residual quantity of heat (Qres) in the drying furnace is still present, after the electrode 10 is introduced into the drying furnace after the immobility time (Timm), while preventing initial over-drying, and when the residual quantity of heat (Qres) in the drying furnace is no longer residual, the drying amount of the electrode (10) can be corrected according to the drying level of the electrode (10), which has the advantage of uniformizing the drying level of the electrode (10). **In** other words, the measuring part 250; 250a, 250b collects the drying amount information of the electrode 10 in real time, and the control part 230 determines the drying level of the electrode 10 based on the collected drying amount information, and periodically corrects the drying amount according to the drying level of the electrode 10, which has the effect of uniformly controlling the drying level of the electrode 10.

The drying amount information is at least one of a solids content of the electrode 10 and a temperature of the electrode surface. The electrode drying system 200 of the present invention determines the drying level of the electrode 10 via the solids content and/or temperature collected via the measurement part. The measurement part may include one or more of a web-gauge and a temperature sensor for measuring the amount of loading of the electrode 10 to collect the solids content and the temperature of the electrode surface.

Referring to FIG. 4, the measuring parts 250a, 250b include web-gauges for measuring the loading amount of the electrode 10, and the measuring parts 250a, 250b may be installed at the inlet and outlet of the drying furnace, respectively, to measure the pre-drying loading amount of the electrode 10 and the post-drying loading amount of the electrode 10. The measuring parts 250a, 250b may further include an operational part for deriving the solids content, and the operational part may derive the solids content of the electrode active material layer 12 from the measured loading amount through a pre-entered calculation formula. Formulas for deriving the solids content from the loading amount may be utilized from those known in the art.

The solids content can be an indicator of the drying level of the electrode 10, as the solids content will be higher than the reference value if the electrode 10 is over-dried, and the solids content will be lower than the reference value if the electrode 10 is under-dried.

The control part 230 may determine the drying level of the electrode 10 based on the drying amount information received from the measuring parts 250a, 250b, and control the amount of heat supplied in the drying furnace according to the determined drying level, thereby correcting the drying amount of the electrode 10 in real time.

In order for the control part 230 to calibrate the drying amount of the electrode 10 in real time, the measuring parts 250a, 250b are set to collect the drying amount information of the electrode 10 periodically at regular time intervals, and the control part 230 periodically controls the amount of heat supplied to the drying furnace by determining the drying level of the electrode 10 whenever the control part 230 receives the drying amount information from the measuring parts 250a, 250b.

The process of controlling the drying amount by the control part 230 will be described in detail. The control part 230 may receive drying amount information such as the pre- and post-drying loading amount of the electrode 10 and/or the temperature of the surface of the electrode 10 from the measuring parts 250a, 250b, and input a reference value to determine whether the drying level of the electrode 10 is over-drying or under-drying. Then, by comparing the drying amount information and the reference value, it is determined whether the drying level of the electrode 10 is over-drying, under-drying, or normal drying, and by comparing the drying amount information and the reference value, the degree of over-drying or under-drying is quantitatively determined to determine the control method of the drying intensity. Once the drying level and the drying amount of the electrode 10 are determined, the drying amount of the electrode 10 can be calibrated by controlling one or more of the hot air nozzle 214, the heater 215, and the travel speed of the transfer roller 216 that causes the electrode 10 to travel, in order to increase or decrease the drying intensity of the drying furnace.

The control of the drying intensity by the control part 230 is not performed only once, but periodically at regular temporal intervals. **In** one specific example, the control part 230 may repeatedly control the drying intensity of the drying furnace at intervals of 5 to 20 minutes, and preferably control the drying intensity at intervals of 6 to 15 minutes, but the periodicity of the control of the drying intensity is not limited thereto.

In addition, the measuring parts 250a, 250b are also configured to collect drying amount information of the electrode 10 periodically, at regular temporal intervals, in conjunction with the drying intensity control by the control part 230. In one specific example, the measuring parts 250a, 250b collect the drying amount information during a period of one to five minutes immediately before the control part 230 is scheduled to control the drying intensity of the drying furnace. In other words, the measuring parts 250a, 250b do not collect the drying amount information of the electrode 10 immediately after the control part 230 controls the drying intensity of the drying furnace, but rather collect the drying amount information of the electrode 10 after a period of time has elapsed after the control part 230 controls the drying intensity of the drying furnace. This is because a period of time is required for the drying amount correction effect to appear due to the change of the drying intensity of the drying furnace.

The measuring parts 250a, 250b may transmit the average or median value of the drying amount information collected during the predetermined time period as a representative value of the drying amount information to the control part 230.

Furthermore, the measuring parts 250a, 250b may include a temperature sensor capable of measuring the temperature of the electrode surface. By measuring the temperature in the drying furnace, the amount of heat quantity supply in the drying furnace can be more precisely controlled.

The present invention also provides a method for drying an electrode using the electrode drying system described above.

FIG. 6 is a flow diagram illustrating the sequence of an electrode drying method according to the present invention.

Referring to FIG. 6, in one example, an electrode drying method according to the present invention includes: (a) collecting immobility time (Timm) information; (b) calculating a residual quantity of heat (Qres) inside a drying furnace during the immobility time (Timm) from pre-calculated drying control data; (c) introducing an electrode into the drying furnace during the immobility time (Timm); and (d) controlling the amount of heat supplied to the drying furnace, wherein the (d) includes supplying a supply quantity of heat (Qsup) to the drying furnace that is equal to the common quantity of heat (Qcom) minus the residual quantity of heat (Qres).

The (a) above collects information on the immobility time (Timm), which is the time that the electrodes are not drying in the drying furnace on the line. This may be sensed by a sensor part installed near the inlet of the drying furnace, as described above.

In (b), from the pre-calculated drying control data, the drying control data having the immobility time (Timm) closest to the immobility time (Timm) on the line collected in (a) is extracted, and based on the extracted drying control data, the residual heat quantity (Qres) is calculated by subtracting the supply quantity (Qsup) from the common quantity of heat (Qcom). In other words, (b) extracts from the pre-calculated drying control data the drying control data having the condition closest to the current condition, wherein the condition means the immobility time (Timm), and extracts the drying control data having the condition closest to the current condition, and calculates, based on the extracted drying control data, the residual quantity of heat (Qres) remaining in the drying furnace for a period of time before the electrode is introduced into the drying furnace having the immobility time (Timm). Then, when the initial drying time is divided into a plurality of time intervals in time series, the residual quantity of heat (Qres) in the drying furnace at each time interval is calculated. The information on the calculated residual quantity of heat (Qres) is transmitted to the control part.

In (d) above, the residual quantity of heat (Qres) received from the data processing part may correspond to a predicted residual quantity of heat (Qres) that remains in the drying furnace during the initial drying time after the electrode is introduced into the drying furnace with the immobility time (Timm) on the line. Accordingly, the control part supplies a supply quantity of heat (Qsup) to the drying furnace, which is obtained by subtracting the residual quantity of heat (Qres) received from the data processing part from the common quantity of heat (Qcom).

The (d) above, wherein the supply quantity of heat (Qsup) is controlled to increase time series while the residual quantity of heat (Qres) in the drying furnace remains, and the common quantity of heat (Qcom) is controlled to be supplied to the drying furnace when there is no residual quantity of heat (Qres) in the drying furnace. In other words, while there is a residual quantity of heat (Qres) in the drying furnace, the heat is supplied to the drying furnace with a lower heat quantity than the common quantity of heat (Qcom), but the heat is supplied so that the supply quantity (Qsup) is gradually/stepwise increased in size in consideration of the residual quantity of heat (Qres) in the drying furnace. On the other hand, if there is no residual quantity of heat (Qres) in the drying furnace, the same quantity of heat as the common quantity of heat (Qcom) is supplied to the drying furnace.

Hereinafter, the electrode drying system of the present invention and the method for drying electrodes using the system will be described in more detail with reference to embodiments of the present invention.

### [Exemplary embodiment]

As an example of pre-calculated drying control data, Table 1 below shows the electrode drying rate as a function of the output value of the infrared heater supplying heat to the drying furnace and the quantity of heat supplied (Qsup) at each time interval during the initial drying time after the electrode is placed in the drying furnace with immobility time (Timm).

**[Table 1]**

| Immobili ty time (min) | sequence number | Time | infrared heater output value | | | | Supply quantity of heat (%) | Residual quantity of heat (%) | Electrode drying rate (%) |
|---|---|---|---|---|---|---|---|---|---|
| | | | The 1^{st} heater | The 2^{nd} heater | The 3^{rd} heater | The 4^{th} heater | | | |
| 154 | 0 | 16:18 | 24.283 | 24.283 | 24.283 | 24.283 | NA | 100 | NA |
| | 1 | 16:19 | 20.983 | 20.983 | 20.983 | 20.983 | 83.93 | 16.07 | 86.765 |
| | 2 | 16:20 | 21.4 | 21.4 | 21.4 | 21.4 | 85.6 | 14.4 | 85.381 |
| | 3 | 16:21 | 21.916 | 21.916 | 21.916 | 21.916 | 87.66 | 12.34 | 84.651 |
| | 4 | 16:22 | 24.75 | 24.75 | 24.75 | 24.75 | 99 | 1 | 85.249 |
| | 5 | 16:23 | 25 | 25 | 25 | 25 | 100 | 0 | 86.166 |
| | 6 | 16:24 | 25 | 25 | 25 | 25 | 100 | 0 | 85.552 |
| | 7 | 16:25 | 25 | 25 | 25 | 25 | 100 | 0 | 85.429 |
| 158 | 0 | 18:44 | 24.283 | 24.283 | 24.283 | 24.283 | NA | 100 | NA |
| | 1 | 18:45 | 20.983 | 20.983 | 20.983 | 20.983 | 83.93 | 16.07 | 86.765 |
| | 2 | 18:46 | 21.4 | 21.4 | 21.4 | 21.4 | 85.6 | 14.4 | 85.381 |
| | 3 | 18:47 | 21.916 | 21.916 | 21.916 | 21.916 | 87.66 | 12.34 | 84.651 |
| | 4 | 18:48 | 24.75 | 24.75 | 24.75 | 24.75 | 99 | 1 | 85.249 |
| | 5 | 18:49 | 25 | 25 | 25 | 25 | 100 | 0 | 86.166 |
| | 6 | 18:50 | 25 | 25 | 25 | 25 | 100 | 0 | 85.552 |
| | 7 | 18:51 | 25 | 25 | 25 | 25 | 100 | 0 | 85.429 |

Referring to Table 1 above, the immobility time (Timm) means the time during which the drying of the electrode is not in progress in the drying furnace, or the time during which the electrode is not loaded into the drying furnace. The sequence number refers to a time sequence of one-minute intervals after the electrode is inserted into the drying furnace having the corresponding immobility time (Timm), wherein the sequence number '0' means that the electrode is not inserted into the drying furnace, and the electrode is inserted into the drying furnace from the sequence number '1' onward. The infrared heater output value means the intensity value of the output of the infrared heater emitting heat energy. Here, the output value ranges from 0 to 25. The first to fourth heaters are infrared heaters installed sequentially in the direction of electrode transfer in some of the drying zones. In an embodiment, the heat source for supplying heat to the drying furnace is an infrared heater, for example, but not limited to. The supply quantity of heat (Qsup) refers to a value expressed as a percentage of the output value of the infrared heater at the corresponding sequence relative to the maximum output value of the infrared heater, and the residual quantity of heat (Qres) refers to a value that excludes the supply quantity of heat (Qsup) from the common quantity of heat (Qcom) when the common quantity of heat (Qcom) is set to 100%.

In Table 1 above, the output value of the infrared heater in the current sequence may be determined by the deviation of the electrode drying rate in the previous sequence from the target electrode drying rate. The process of deriving the output value of the infrared heater in the current sequence is described in detail using Tables 2 and 3 below as examples.

Table 2 below shows various electrode drying rate information and infrared heater output value information to illustrate the proportional control (P-control) method that derives the infrared heater output value to be applied in the current sequence from the pre-calculated drying control data when the electrode drying rate in the previous sequence is less than the target electrode drying rate.

**[Table 2]**

| Numb er | Electrode drying rate(%) | | | infrared heater output value (%) | | |
|---|---|---|---|---|---|---|
| | Maximum | Previous sequence | Target value | Previous sequence | Current sequence | Maximum |
| 1 | 91 | 82 | 85 | 80 | 86.7 | 100 |
| 2 | 91 | 83 | 85 | 80 | 85 | 100 |
| 3 | 91 | 84 | 85 | 80 | 82.9 | 100 |

*125The maximum electrode drying rate in Table 2 above means the maximum electrode drying rate set as a limit by the electrode model to be dried. The maximum electrode drying rate is a criterion for determining the degree of deviation between the previous sequence drying rate and the target electrode drying rate. Referring to Table 2 above, in number 1, an output value change amount (6.7%) relative to the infrared heater output value (80%) in the previous sequence is determined in proportion to the deviation (3%) between the electrode drying rate (82%) in the previous sequence and the target electrode drying rate (85%) in the current sequence, and accordingly, the infrared heater output value (86.7%) to be applied in the current sequence is determined.

In number 3, the amount of change in the output value (2.9%) is determined relative to the output value (80%) of the infrared heater in the previous sequence, proportional to the deviation (1%) between the electrode drying rate (84%) and the target electrode drying rate (85%) in the previous sequence, and accordingly, the infrared heater output value (82.9%) to be applied in the current sequence is determined. It can be observed that the infrared heater output value to be applied in the current sequence has a smaller change in width than the infrared heater output value to be applied in the previous sequence.

Table 3 below shows various electrode drying rate information and infrared heater output value information to illustrate an exception to the proportional control (P control) method, which derives the infrared heater output value to be applied in the current sequence from pre-calculated drying control data if the electrode drying rate in the previous sequence was equal to or greater than the target electrode drying rate.

**[Table 3]**

| Number | Electrode drying rate(%) | | | Infrared heater output value(%) | | |
|---|---|---|---|---|---|---|
| | Maximum | Previous sequence | Target value | Previous sequence | Current sequence | Maximum |
| 1 | 91 | 85 | 85 | 80 | 80 | 100 |
| 2 | 91 | 86 | 85 | 80 | 80 | 100 |

Referring to Table 3, in number 1, the electrode drying rate (85%) in the previous sequence is equal to the target electrode drying rate (85%). In other words, the electrode drying rate in the previous sequence has reached the target electrode drying rate. At this time, the infrared heater output value to be applied in the current sequence is determined to be the same value as the infrared heater output value applied in the previous sequence. If the infrared heater output value to be applied in the current sequence is increased, excessive drying of the electrode may occur, therefore, the infrared heater output value applied in the previous sequence is maintained. In number 2, the electrode drying percentage (86%) in the previous sequence exceeded the target electrode drying percentage (85%). In other words, the electrodes were over-dried in the previous sequence. In this case, as in example 1, the infrared heater output value to be applied in the current sequence is determined to be the same value as the infrared heater output value applied in the previous sequence.

Referring again to Table 1 above, when the immobility time (Timm) of the line input to the data processing part of the present invention is 154 minutes, the data processing part derives, among the pre-calculated drying control data, the pre-calculated drying control data when the immobility time (Timm) in Table 1 is 154 minutes in a search grid method. In this case, the pre-calculated drying control data when the immobility time (Timm) in Table 1 is 158 minutes is not derived. In the embodiment, the data processing part uses only the immobility time (Timm) information as a variable, but is not limited to it. In other words, in addition to the immobility time (Timm) information, any of the following information can be set as additional variables: the output value of the infrared heater operated during the immobility time (Timm), the product name of the electrode to be dried, and the temperature outside the drying furnace.

The data processing part derives information regarding the infrared heater output value, the supply quantity of heat (Qsup), the residual quantity of heat (Qres), and the electrode drying rate from the derived drying control data in steps 1 to 7 of the derived drying control data, and calculates the residual quantity of heat (Qres) to be applied on the line. The method for calculating the residual quantity of heat (Qres) to be applied on the line can be performed by still reflecting the residual quantity of heat (Qres) information derived from the derived drying control data, or by performing a correction process as necessary.

In the following, the data processing part assumes that the calibration process is not necessary.

The control part determines and controls the amount of heat supplied to the drying furnace based on the information derived from the data processing part. The amount of heat supplied to the drying furnace may be determined according to the amount of heat energy emitted by the infrared heater as described above and the corresponding infrared heater output value.

Specifically, the control part determines, based on the residual quantity of heat (Qres) in the sequences 1 to 7 detected by the data processing part, the amount of heat to be supplied to the drying furnace for 7 minutes after the electrode in the drying furnace with the immobility time (Timm) on the line is introduced. At this time, the control part supplies the supply quantity of heat (Qsup), which is the common quantity of heat (Qcom) subtracting the residual quantity of heat (Qres), to the drying furnace.

The control part determines the supply quantity of heat (Qsup) to be 83.93% and controls the infrared heater output value to be 20.983 for 1 minute after the electrode is inserted, as shown in sequence 1 of the drying control data. Further, the control part determines the supply quantity of heat (Qsup) to be 83.93% and controls the infrared heater output value to be 21.4 for 1-2 minutes after the electrode is inserted, as shown in sequence 2 of the drying control data. Thereafter, the control part controls the supply quantity of heat (Qsup) and the infrared heater output value at sequence 4, 5, 6, and 7 of the drying control data for 3-4 minutes, 4-5 minutes, 5-6 minutes, and 6-7 minutes, respectively.

For 4 minutes after the electrode is loaded, the amount of heat supplied to the drying furnace is controlled by a differential heat supply method that increases the amount of heat supplied to the drying furnace as time elapses after the electrode is loaded. As described above, the infrared heater output value for each time interval in the drying control data is determined by the deviation between the electrode drying rate in the previous time interval and the target electrode drying rate. In this case, the target electrode drying rate is determined by considering the residual quantity of heat (Qres) in the drying furnace. Thus, during the 4 minutes after the electrode is loaded, it may be the case that the electrode drying rate in the previous time interval has not reached the target electrode drying rate, and that there is a residual quantity of heat (Qres) in the drying furnace. Therefore, the control part may determine the supply quantity of heat (Qsup) in a differential heat supply method in consideration of the residual quantity of heat (Qres) in the drying furnace, so as to suppress the over-drying that occurs during the initial drying due to the residual quantity of heat (Qres) in the drying furnace with the immobility time (Timm) to prevent cracking of the electrode.

On the other hand, there is no residual quantity of heat (Qres) in the drying furnace after 5 minutes after the electrode is introduced into the drying furnace with an immobility time (Timm) on the line. At this time, the control part controls the amount of heat supplied to the drying furnace such that the amount of heat commonly supplied to the drying furnace is supplied. As described above, the infrared heater output value for each time interval in the drying control data maintains the infrared heater output value applied in the previous time interval if the electrode drying rate in the previous time interval reaches the target electrode drying rate. In this case, the target electrode drying rate is also determined by considering the residual quantity of heat (Qres) in the drying furnace. Therefore, after 5 minutes after the electrode is loaded, the electrode drying rate in the previous time interval may be such that the target electrode drying rate has been reached, i.e., the residual quantity of heat (Qres) in the drying furnace remains. Therefore, the control part may determine the supply quantity of heat (Qsup) in a common quantity of heat supply method after 5 minutes has elapsed to provide a uniform quantity of heat into the drying furnace to improve the quality uniformity of the electrode.

The present invention derives drying control data having a condition that best matches the current immobility time (Timm) condition from among the pre-calculated drying control data, supplies an appropriate quantity of heat in the drying furnace with the immobility time (Timm) from the derived drying control data, and predicts the drying rate, so that the quality of the electrode can be improved by preventing excessive drying of the electrode due to the residual quantity of heat (Qres).

Therefore, the technical scope of the present invention should not be limited to the contents described in the detailed description of the specification but should be defined by the claims.

### [Description of Reference Numerals]

10: electrode,
11: current collector
12: electrode active material layer
100, 200: electrode drying system
110: drying furnace
111, 211: first drying zone
112, 212: second drying zone
113, 213: third drying zone
114, 214: hot air nozzle
115, 215: heater
116, 216: transfer roller
117, 217: first operation control part
118, 218: second operation control part
119, 219: third operation control part
120, 220: data processing part
130, 230: control part
140, 240: sensor part
250a, 250b: measuring part

## Claims

1. An electrode drying system (100, 200), comprising: a drying furnace (110) in which electrodes (10) are dried; and a data processing part (120, 220) configured to calculate a residual quantity of heat (Qres) in the drying furnace (110) during an immobility time (Timm) from pre-calculated drying control data, wherein the residual quantity of heat (Qres) is the quantity of heat accumulated in the drying furnace (110) during a break in the input of the electrode into the drying furnace; and
a control part (130, 230) configured to control the amount of heat supplied to the drying furnace (110), wherein the control part (130, 230) is configured to supply a supply quantity of heat (Qsup) to the drying furnace (110) which is determined by subtracting the residual quantity of heat (Qres) from a common quantity of heat (Qcom), wherein the common quantity of heat (Qcom) is the quantity of heat that would normally be supplied to the drying furnace if it did not have an immobility time (Timm),
wherein the drying control data comprises electrode drying rate as a function of immobility time (Timm) and supply quantity of heat (Qsup), and
wherein the data processing part (120, 220) is configured to extract, from the pre-calculated drying control data, drying control data having an immobility time that is closest to the immobility time (Timm) on the line, and to calculate, based on the extracted drying control data, the residual
quantity of heat (Qres) which is the common quantity of heat (Qcom) subtracted by the supply quantity of heat (Qsup).

2. The electrode drying system of claim 1, wherein the control part (130, 230) is configured to control the supply quantity of heat (Qsup) to increase time series while the residual quantity of heat (Qres) in the drying furnace (110) remains.

3. The electrode drying system of claim 1, wherein the control part (130, 230) controls that the drying furnace is supplied with common quantity of heat (Qcom) if there is no residual quantity of heat (Qres) in the drying furnace.

4. The electrode drying system of claim 1, wherein a drying furnace (110) comprises a hot air nozzle (114, 214) that supplies hot air to the electrodes (10) to apply convection heat and a heater (115, 215) that applies radiant heat to the electrodes (10).

5. The electrode drying system of claim 4, wherein the control part (130, 230) is configured to control the amount of heat supplied to the drying furnace (110) by increasing or decreasing one or more of the following conditions: the temperature of the hot air dispensed from the hot air nozzle (114, 214), the air velocity of the hot air, and the output of the heater (115, 215).

6. The electrode drying system of claim 5, wherein the control part (130, 230) is configured to uniformly control the amount of heat supplied to the drying furnace (110) for the entire drying furnace (110).

7. The electrode drying system of claim 1, comprising: a sensor part (140, 240) configured to detect that an electrode (10) is not being fed into the drying furnace and to transmit immobility time (Timm) information to a data processing part (120, 220).

8. The electrode drying system of claim 1, further comprising: a measuring part (250a, 250b) configured to collect drying amount information of the electrode (10) and to transmit the collected information to a control part (130, 230); and the control part (130, 230) is configured to determine the drying amount level of the electrode (10) based on the drying amount information received from the measuring part (250a, 250b) and to compensate for the increase or decrease in the amount of heat supplied to the drying furnace (110) in real time.

9. The electrode drying system of claim 8, wherein the measuring part (250a, 250b) is configured to collect at least one of a solids content of the electrode (10) and a temperature of the electrode surface before and after passing through the drying furnace (110).

10. A method of drying an electrode (10) comprising: (a) collecting immobility time (Timm) information;
(b) calculating a residual quantity of heat (Qres) in a drying furnace (110) during the immobility time (Timm) from pre-calculated drying control data, wherein the residual quantity of heat (Qres) is the quantity of heat accumulated in the drying furnace (110) during a break in the input of the electrode into the drying furnace;
(c) introducing an electrode (10) into the drying furnace (110) having the immobility time; and (d) controlling the amount of heat supplied to the drying furnace (110),
wherein during the step (d) the supply quantity of heat (Qsup) is supplied to the drying furnace (110) which is determined by subtracting the residual quantity of heat (Qres) from a common quantity of heat (Qcom), wherein the common quantity of heat (Qcom) is the quantity of heat that would normally be supplied to the drying furnace if it did not have an immobility time (Timm),
wherein the drying control data comprises electrode drying rate as a function of immobility time (Timm) and supply quantity of heat (Qsup), and
wherein the step (b) comprises extracting, from the pre-calculated drying control data, drying control data having an immobility time that is closest to the immobility time on the line (Timm) collected in the step (a), and calculating, based on the extracted drying control data, the residual quantity of heat (Qres) which is the common quantity of heat (Qcom) subtracted by the supply quantity of heat (Qsup).

11. The method of drying an electrode of claim 10, wherein the step (d) comprises controlling the supply quantity of heat (Qsup) to increase time series while the residual quantity of heat (Qres) in the drying furnace (110) remains, and controlling the drying furnace (110) to be supplied with the common quantity of heat (Qcom) when there is no residual quantity of heat (Qres) in the drying furnace (110).

## Patentansprüche

1. Elektrodentrocknungssystem (100, 200), umfassend: einen Trocknungsofen (110), in welchem Elektroden (10) getrocknet werden; und einen Datenverarbeitungsteil (120, 220), welcher dazu eingerichtet ist, eine Restwärmemenge (Qres) in dem Trocknungsofen (110) während einer Stillstandszeit (Timm) aus vorberechneten Trocknungssteuerdaten zu berechnen, wobei die Restwärmemenge (Qres) die in dem Trocknungsofen (110) während einer Unterbrechung der Elektrodenzufuhr in den Trocknungsofen angesammelte Wärmemenge ist; und
einen Steuerungsteil (130, 230), welcher dazu eingerichtet ist, die dem Trocknungsofen (110) zugeführte Wärmemenge zu steuern, wobei der Steuerungsteil (130, 230) dazu eingerichtet ist, dem Trocknungsofen (110) eine Zufuhrwärmemenge (Qsup) zuzuführen, welche durch ein Subtrahieren der Restwärmemenge (Qres) von einer regulären Wärmemenge (Qcom) bestimmt wird, wobei die reguläre Wärmemenge (Qcom) die Wärmemenge ist, welche dem Trocknungsofen normalerweise zugeführt werden würde, wenn keine Stillstandszeit (Timm) vorliegen würde,
wobei die Trocknungssteuerdaten eine Elektrodentrocknungsrate als eine Funktion einer Stillstandszeit (Timm) und einer Zufuhrwärmemenge (Qsup) umfassen, und
wobei der Datenverarbeitungsteil (120, 220) dazu eingerichtet ist, aus den vorberechneten Trocknungssteuerdaten diejenigen Trocknungssteuerdaten zu extrahieren, welche eine Stillstandszeit aufweisen, die der Stillstandszeit (Timm) in der Linie am nächsten liegt, und auf Grundlage der extrahierten Trocknungssteuerdaten die Restwärmemenge (Qres) zu berechnen, welche sich aus der regulären Wärmemenge (Qcom) abzüglich der Zufuhrwärmemenge (Qsup) ergibt.

2. Elektrodentrocknungssystem nach Anspruch 1, wobei der Steuerungsteil (130, 230) dazu eingerichtet ist, die Zufuhrwärmemenge (Qsup) derart zu steuern, dass diese in einer Zeitreihe ansteigt, während die Restwärmemenge (Qres) in dem Trocknungsofen (110) erhalten bleibt.

3. Elektrodentrocknungssystem nach Anspruch 1, wobei der Steuerungsteil (130, 230) steuert, dass dem Trocknungsofen eine reguläre Wärmemenge (Qcom) zugeführt wird, wenn keine Restwärmemenge (Qres) in dem Trocknungsofen vorhanden ist.

4. Elektrodentrocknungssystem nach Anspruch 1, wobei ein Trocknungsofen (110) eine Heißluftdüse (114, 214), welche den Elektroden (10) Heißluft zuführt, um Konvektionswärme aufzubringen, und eine Heizeinrichtung (115, 215) umfasst, welche Strahlungswärme auf die Elektroden (10) aufbringt.

5. Elektrodentrocknungssystem nach Anspruch 4, wobei der Steuerungsteil (130, 230) dazu eingerichtet ist, die dem Trocknungsofen (110) zugeführte Wärmemenge durch ein Erhöhen oder ein Verringern einer oder mehrerer der folgenden Bedingungen zu steuern: die Temperatur der aus der Heißluftdüse (114, 214) abgegebenen Heißluft, die Luftgeschwindigkeit der Heißluft und die Leistung der Heizeinrichtung (115, 215).

6. Elektrodentrocknungssystem nach Anspruch 5, wobei der Steuerungsteil (130, 230) dazu eingerichtet ist, die dem Trocknungsofen (110) zugeführte Wärmemenge einheitlich für den gesamten Trocknungsofen (110) zu steuern.

7. Elektrodentrocknungssystem nach Anspruch 1, umfassend: einen Sensorteil (140, 240), welcher dazu eingerichtet ist, zu detektieren, dass dem Trocknungsofen keine Elektrode (10) zugeführt wird, und Stillstandszeit- (Timm) -Informationen an den Datenverarbeitungsteil (120, 220) zu übermitteln.

8. Elektrodentrocknungssystem nach Anspruch 1, ferner umfassend: einen Messteil (250a, 250b), welcher dazu eingerichtet ist, Trocknungsmengeninformationen der Elektrode (10) zu erfassen und die erfassten Informationen an den Steuerungsteil (130, 230) zu übermitteln; und wobei der Steuerungsteil (130, 230) dazu eingerichtet ist, den Trocknungsmengengrad der Elektrode (10) auf Grundlage der von dem Messteil (250a, 250b) empfangenen Trocknungsmengeninformationen zu bestimmen und die Erhöhung oder Verringerung der dem Trocknungsofen (110) zugeführten Wärmemenge in Echtzeit zu kompensieren.

9. Elektrodentrocknungssystem nach Anspruch 8, wobei der Messteil (250a, 250b) dazu eingerichtet ist, wenigstens eines aus einem Feststoffgehalt der Elektrode (10) und einer Temperatur der Elektrodenoberfläche vor und nach einem Durchlaufen des Trocknungsofens (110) zu erfassen.

10. Verfahren zum Trocknen einer Elektrode (10), umfassend: (a) Erfassen von Stillstandszeit- (Timm) -Informationen;
(b) Berechnen einer Restwärmemenge (Qres) in einem Trocknungsofen (110) während der Stillstandszeit (Timm) aus vorberechneten Trocknungssteuerdaten, wobei die Restwärmemenge (Qres) die in dem Trocknungsofen (110) während einer Unterbrechung der Elektrodenzufuhr in den Trocknungsofen angesammelte Wärmemenge ist;
(c) Einführen einer Elektrode (10) in den Trocknungsofen (110), welcher die Stillstandszeit aufweist; und (d) Steuern der dem Trocknungsofen (110) zugeführten Wärmemenge,
wobei während des Schritts (d) die Zufuhrwärmemenge (Qsup) dem Trocknungsofen (110) zugeführt wird, welche durch ein Subtrahieren der Restwärmemenge (Qres) von einer regulären Wärmemenge (Qcom) bestimmt wird, wobei die reguläre Wärmemenge (Qcom) die Wärmemenge ist, welche dem Trocknungsofen normalerweise zugeführt werden würde, wenn keine Stillstandszeit (Timm) vorliegen würde,
wobei die Trocknungssteuerdaten eine Elektrodentrocknungsrate als eine Funktion einer Stillstandszeit (Timm) und einer Zufuhrwärmemenge (Qsup) umfassen, und
wobei der Schritt (b) ein Extrahieren derjenigen Trocknungssteuerdaten aus den vorberechneten Trocknungssteuerdaten, welche eine Stillstandszeit aufweisen, die der in dem Schritt (a) erfassten Stillstandszeit in der Linie (Timm) am nächsten liegt, und ein Berechnen der Restwärmemenge (Qres) auf Grundlage der extrahierten Trocknungssteuerdaten umfasst, welche sich aus der regulären Wärmemenge (Qcom) abzüglich der Zufuhrwärmemenge (Qsup) ergibt.

11. Verfahren zum Trocknen einer Elektrode nach Anspruch 10, wobei der Schritt (d) ein Steuern der Zufuhrwärmemenge (Qsup) derart, dass diese in einer Zeitreihe ansteigt, während die Restwärmemenge (Qres) in dem Trocknungsofen (110) erhalten bleibt, und ein Steuern des Trocknungsofens (110) derart umfasst, dass diesem eine reguläre Wärmemenge (Qcom) zugeführt wird, wenn keine Restwärmemenge (Qres) in dem Trocknungsofen (110) vorhanden ist.

## Revendications

1. Système de séchage d'électrode (100, 200), comprenant : un four de séchage (110) dans lequel des électrodes (10) sont séchées ; et une partie de traitement de données (120, 220) configurée pour calculer une quantité de chaleur résiduelle (Qres) dans le four de séchage (110) pendant un temps d'immobilisation (Timm) à partir de données de commande de séchage pré-calculées, dans lequel la quantité de chaleur résiduelle (Qres) est la quantité de chaleur accumulée dans le four de séchage (110) pendant une interruption de l'entrée de l'électrode dans le four de séchage ; et
une partie de commande (130, 230) configurée pour commander la quantité de chaleur fournie au four de séchage (110), dans lequel la partie de commande (130, 230) est configurée pour fournir une quantité de chaleur d'alimentation (Qsup) au four de séchage (110) qui est déterminée en soustrayant la quantité de chaleur résiduelle (Qres) d'une quantité de chaleur commune (Qcom), dans lequel la quantité de chaleur commune (Qcom) est la quantité de chaleur qui serait normalement fournie au four de séchage si ce dernier n'avait pas de temps d'immobilisation (Timm),
dans lequel les données de commande de séchage comprennent une vitesse de séchage d'électrode en fonction du temps d'immobilisation (Timm) et de la quantité de chaleur d'alimentation (Qsup), et
dans lequel la partie de traitement de données (120, 220) est configurée pour extraire, à partir des données de commande de séchage pré-calculées, des données de commande de séchage ayant un temps d'immobilisation qui est le plus proche du temps d'immobilisation (Timm) sur la ligne, et pour calculer, sur la base des données de commande de séchage extraites, la quantité de chaleur résiduelle (Qres) qui est la quantité de chaleur commune (Qcom) à laquelle est soustraite la quantité de chaleur d'alimentation (Qsup).

2. Système de séchage d'électrode selon la revendication 1, dans lequel la partie de commande (130, 230) est configurée pour commander la quantité de chaleur d'alimentation (Qsup) afin d'augmenter une série chronologique pendant laquelle la quantité de chaleur résiduelle (Qres) demeure dans le four de séchage (110).

3. Système de séchage d'électrode selon la revendication 1, dans lequel la partie de commande (130, 230) effectue une commande de sorte que le four de séchage est alimenté en quantité de chaleur commune (Qcom) s'il n'y a aucune quantité de chaleur résiduelle (Qres) dans le four de séchage.

4. Système de séchage d'électrode selon la revendication 1, dans lequel un four de séchage (110) comprend une buse d'air chaud (114, 214) qui fournit de l'air chaud aux électrodes (10) pour appliquer de la chaleur par convection et un dispositif de chauffage (115, 215) qui applique de la chaleur rayonnante aux électrodes (10).

5. Système de séchage d'électrode selon la revendication 4, dans lequel la partie de commande (130, 230) est configurée pour commander la quantité de chaleur fournie au four de séchage (110) en augmentant ou en diminuant une ou plusieurs des conditions suivantes : la température de l'air chaud délivré par la buse d'air chaud (114, 214), la vélocité d'air de l'air chaud, et la sortie du dispositif de chauffage (115, 215).

6. Système de séchage d'électrode selon la revendication 5, dans lequel la partie de commande (130, 230) est configurée pour commander uniformément la quantité de chaleur fournie au four de séchage (110) pour l'ensemble du four de séchage (110).

7. Système de séchage d'électrode selon la revendication 1, comprenant : une partie capteur (140, 240) configurée pour détecter qu'une électrode (10) n'est pas acheminée dans le four de séchage et pour transmettre des informations de temps d'immobilisation (Timm) à une partie de traitement de données (120, 220).

8. Système de séchage d'électrode selon la revendication 1, comprenant en outre : une partie de mesure (250a, 250b) configurée pour collecter des informations de quantité de séchage de l'électrode (10) et pour transmettre les informations collectées à une partie de commande (130, 230) ; et la partie de commande (130, 230) est configurée pour déterminer le niveau de quantité de séchage de l'électrode (10) sur la base des informations de quantité de séchage reçues de la partie de mesure (250a, 250b) et pour compenser l'augmentation ou la diminution de la quantité de chaleur fournie au four de séchage (110) en temps réel.

9. Système de séchage d'électrode selon la revendication 8, dans lequel la partie de mesure (250a, 250b) est configurée pour collecter au moins l'une parmi une teneur en solides de l'électrode (10) et une température de la surface d'électrode avant et après passage à travers le four de séchage (110).

10. Procédé de séchage d'une électrode (10) comprenant : (a) la collecte d'informations de temps d'immobilisation (Timm) ;
(b) le calcul d'une quantité de chaleur résiduelle (Qres) dans un four de séchage (110) pendant le temps d'immobilisation (Timm) à partir de données de commande de séchage pré-calculées, dans lequel la quantité de chaleur résiduelle (Qres) est la quantité de chaleur accumulée dans le four de séchage (110) pendant une interruption de l'entrée de l'électrode dans le four de séchage ;
(c) l'introduction d'une électrode (10) dans le four de séchage (110) ayant le temps d'immobilisation ; et (d) la commande de la quantité de chaleur fournie au four de séchage (110),
dans lequel, pendant l'étape (d), la quantité de chaleur d'alimentation (Qsup) est fournie au four de séchage (110) qui est déterminée en soustrayant la quantité de chaleur résiduelle (Qres) d'une quantité de chaleur commune (Qcom), dans lequel la quantité de chaleur commune (Qcom) est la quantité de chaleur qui serait normalement fournie au four de séchage si ce dernier n'avait pas un temps d'immobilisation (Timm), dans lequel les données de commande de séchage comprennent une vitesse de séchage d'électrode en fonction du temps d'immobilisation (Timm) et de la quantité de chaleur d'alimentation (Qsup), et
dans lequel l'étape (b) comprend l'extraction, à partir des données de commande de séchage pré-calculées, de données de commande de séchage ayant un temps d'immobilisation qui est le plus proche du temps d'immobilisation (Timm) sur la ligne collecté lors de l'étape (a), et le calcul, sur la base des données de commande de séchage extraites, de la quantité de chaleur résiduelle (Qres) qui est la quantité de chaleur commune (Qcom) à laquelle est soustraite la quantité de chaleur d'alimentation (Qsup).

11. Procédé de séchage d'une électrode selon la revendication 10, dans lequel l'étape (d) comprend la commande de la quantité de chaleur d'alimentation (Qsup) pour augmenter une série chronologique pendant laquelle la quantité de chaleur résiduelle (Qres) demeure dans le four de séchage (110), et la commande du four de séchage (110) pour qu'il soit alimenté à l'aide de la quantité de chaleur commune (Qcom) lorsqu'il n'y a aucune quantité de chaleur résiduelle (Qres) dans le four de séchage (110).
